# FASCICULE DE BREVET EUROPEEN

(11) **EP 2 427 407 B1**
(45) Date de publication et mention de la délivrance du brevet: **13.09.2017**
(21) Numéro de dépôt: 10727463.1
(22) Date de dépôt: 06.05.2010
(51) Int. Cl.: C01C 1/02, C01C 1/10, C01C 1/12, B01D 53/58

(54) **PROCÉDÉ DE RÉCUPÉRATION ET DE RECYCLAGE D'AMMONIAC**
VERFAHREN ZUR RÜCKGEWINNUNG UND RÜCKFÜHRUNG VON AMMONIAK
METHOD FOR RECOVERING AND RECYCLING AMMONIA

(30) Priorité: 06.05.2009 FR 0953008
(43) Date de publication de la demande: 14.03.2012
(73) Titulaire: Alcion Environnement, 75116 Paris (FR)
(72) Inventeur: RICARD, Jean-Philippe, F-33000 Bordeaux (FR); RICARD, Maxime, F-78630 Morainvilliers (FR); JACQUES, Pascal, F-78110 Le Vesinet (FR)
(74) Mandataire: Aquinov
(86) Numéro de dépôt international: PCT/FR2010/050868
(87) Numéro de publication internationale: WO 2010/128257

(56) Documents cités:
- WO-A1-2006/061082
- CN-A- 1 271 690
- DE-A1- 2 652 524
- FR-A1- 2 376 826
- US-B1- 7 258 848

## Description

La présente invention concerne le traitement d'effluents pollués à l'ammoniac et le recyclage des produits récupérés.

En particulier l'invention se rapporte à l'utilisation d'effluents pollués à l'ammoniac pour produire une solution d'alcali et des co-produits.

L'ammoniac ou NH₃ est présent à l'état naturel dans l'environnement. Il provient de la dégradation biologique des matières azotées présentes dans les déchets organiques ou le sol. C'est aussi un composé naturel dont ont besoin la plupart des organismes pour la synthèse des protéines et c'est un déchet du métabolisme des animaux.

Toutefois, le rejet de gros volumes d'ammoniac sous forme gazeuse dans l'atmosphère, comme le lisier dans des zones d'élevage intensif, est responsable de l'acidification des milieux et peut entraîner un ensemble de modifications plus ou moins profondes qui affecte les écosystèmes sensibles. L'ammoniac se combine avec les sulfates et les nitrates pour former des particules fines secondaires qui ont un effet néfaste sur la santé humaine et l'environnement. L'ammoniac peut aussi jouer un rôle dans la nitrification et l'eutrophisation des écosystèmes aquatiques.

En outre l'ammoniac gazeux a une action irritante sur les muqueuses oculaires, sur la trachée et les bronches lorsqu'il est inhalé en petites quantités et devient toxique en grandes quantités.

Lorsque l'ammoniac est dissous dans l'eau il forme une solution aqueuse d'ammoniac constituée d'ions ammonium (NH₄⁺) et hydroxyde (OH⁻) ou d'une forme moléculaire aqueuse d'ammoniac. Les ions ammonium ne sont pas dangereux mais le liquide constitué est très volatil et l'ammoniac gazeux libéré a les effets néfastes déjà énoncés. Au même titre que l'air, l'eau peut donc aussi être polluée à l'ammoniaque.

Les principales sources d'émission d'ammoniac sont agricoles : lisiers des animaux d'élevage, pesticides et engrais. On retrouve également des émissions d'ammoniac dans l'industrie chimique, les raffineries de pétrole, les fabriques de pâtes et papiers, le transport, dans les centres de compostage et les stations d'épuration. Du fait de leur forte odeur et de leurs caractéristiques néfastes et dangereuses pour l'homme et l'environnement, les effluents gazeux ou liquides pollués à l'ammoniac sont traités par des procédés, destinés à éliminer cette pollution. L'élimination de la pollution de l'eau à l'ammoniaque passe généralement par des traitements au chlore. Toutefois ces traitements entraînent la formation de sous-produits organochlorés nuisibles pour la santé. Il existe également des procédés de traitement biologique, procédés de nitrification-dénitrification qui consistent à oxyder les ions ammonium (NH₄⁺) en nitrites par des bactéries, puis à transformer les nitrites en nitrates, qui sont ensuite éliminés.

Les effluents gazeux sont quant à eux classiquement traités par lavages : un lavage acide avec de l'acide sulfurique, suivi d'un lavage basique et enfin d'un lavage oxydo-basique en présence de soude et de javel.

Le lavage de gaz consiste à solubiliser un polluant gazeux dans un liquide. Ce liquide peut être soit de l'eau, de l'eau additionnée d'un réactif ou un solvant. Pour la dépollution d'air pollué à l'ammoniac, le lavage acide consiste à solubiliser l'effluent à traiter dans une solution d'acide sulfurique. La réaction qui se produit est la suivante :

2(NH₃) + H₂SO₄ → 2(NH₄⁺) + SO₄²⁻

Les ions ammonium et sulfures obtenus sont ensuite purgés en post traitement ou détruits. Un tel traitement d'un gaz acide est décrit dans US 7 258 848. Le gaz acide est mis en contact avec un acide fort, par exemple l'acide nitrique, pour obtenir une phase gazeuse et une solution comprenant un sel d'ammonium. La phase gazeuse est séparée, la solution du sel d'ammonium est purifiée et puis mise en contact avec une base, par exemple l'hydroxyde de potassium. Toutefois ces procédés existants de traitements des effluents pollués à l'ammoniac, tant liquides que gazeux, nécessitent des installations lourdes et engendrent des coûts importants liés à la nécessité de détruire les déchets obtenus lors de la dépollution.

C'est pourquoi l'objectif de la présente invention est de pallier aux inconvénients de l'art antérieur en proposant un procédé de traitement des effluents pollués à l'ammoniac, économique, avec zéro rejet, les déchets issus de la dépollution étant recyclés en produits utilisables dans l'industrie.

En particulier l'invention vise l'utilisation d'air pollué à l'ammoniac pour produire une solution d'alcali ou d'ammoniaque aqueuse comprenant entre 5 et 35% d'ammoniac.

L'Alcali (NH₄OH) ou Ammoniaque est une solution aqueuse d'ammoniac utilisée dans différents domaines, notamment pour la fermentation, l'agroalimentaire, le secteur pharmaceutique et le traitement des eaux usées et des fumées.

Sa fabrication consiste dans un premier temps à combiner directement de l'hydrogène et de l'azote sous haute pression en présence d'un catalyseur, pour créer un gaz d'ammoniac pur qui est ensuite dissous dans l'eau déminéralisée à une concentration déterminée en fonction des applications visées.

Cette méthode de production n'est pas satisfaisante et présente de nombreux inconvénients. Elle utilise des produits dangereux comme l'hydrogène et présente un coût énergétique. En outre elle présente également l'inconvénient de consommer de l'énergie fossile (pétrole, gaz) pour la production d'hydrogène, et nécessite des installations lourdes en investissement et complexes en fonctionnement.

Avantageusement, l'invention permet de fabriquer des solutions d'alcali de qualité égale à celles fabriquées actuellement, à moindre coût, à partir de sources existantes, à savoir d'effluents gazeux pollués à l'ammoniac, sans avoir à manipuler ni hydrogène ni azote.

Pour répondre à son objectif, la présente invention propose un procédé de traitement d'un effluent pollué à l'ammoniac, comprenant au moins les étapes suivantes :
- récupération d'un effluent gazeux ou évent pollué à l'ammoniac,
- absorption de l'ammoniac gazeux contenu dans l'effluent par lavage à l'acide nitrique, de façon à obtenir une solution de nitrate d'ammonium,
- ajout d'une solution basique à la solution de nitrate d'ammonium de façon à entraîner l'évaporation d'ammoniac et obtenir des sels de nitrate, et
- absorption de l'ammoniac évaporé dans un contacteur gaz-liquide pour produire une solution d'alcali.

Par contacteur gaz-liquide au sens de l'invention, on entend un système permettant d'effectuer un transfert de masse entre un gaz et un liquide, par absorption physique, par réaction chimique ou par effet thermique.

De façon avantageuse, l'invention permet à la fois d'éliminer l'ammoniac d'un évent pollué et de recycler la totalité des déchets récupérés en produits utilisables dans l'industrie.

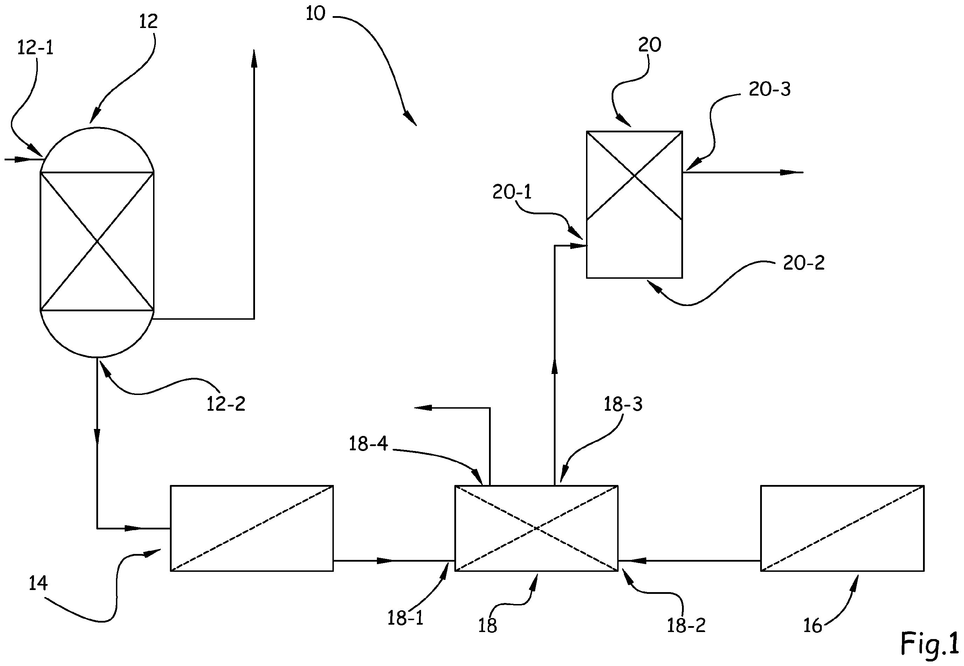

D'autres caractéristiques et avantages ressortiront de la description en détail qui va suivre, description donnée à titre d'exemple uniquement, en regard notamment d'un unique dessin annexé sur lequel la figure 1 représente un schéma d'une installation pour le traitement d'un effluent gazeux selon le procédé de l'invention. L'invention vise donc l'utilisation d'effluents gazeux ou évents pollués à l'ammoniac pour produire une solution d'alcali comprenant entre 5 et 35% d'ammoniac, préférentiellement entre 10 et 30%, encore plus préférentiellement 20%.

Par effluents gazeux pollués à l'ammoniac ou évents on entend tout air comprenant de l'ammoniac. En particulier il peut s'agir d'effluents gazeux issus de la fermentation de matière organique, de boues de stations d'épuration, d'élevage (déjections de porcs ou de canards notamment), ou encore d'usines de traitement de surface.

Selon l'invention, l'effluent gazeux peut être utilisé pour produire à la fois une solution d'alcali et une solution de sels de nitrate, préférentiellement une solution comprenant entre 10 et 50% de sels de nitrate.

Pour produire une solution d'alcali à partir d'un effluent pollué à l'ammoniac et dépolluer cet effluent, l'invention propose un procédé de traitement comprenant au moins les étapes suivantes :
- récupération d'un effluent gazeux pollué à l'ammoniac,
- absorption de l'ammoniac gazeux contenu dans l'effluent par lavage à l'acide nitrique, de façon à obtenir une solution de nitrate d'ammonium,
- ajout d'une solution basique à la solution de nitrate d'ammonium de façon à entraîner l'évaporation d'ammoniac, préférentiellement à une pression inférieure à la pression atmosphérique, et obtenir des sels de nitrate, et
- absorption de l'ammoniac évaporé dans un contacteur gaz-liquide pour produire une solution d'alcali.

L'ammoniac gazeux qui s'évapore à l'étape de traitement peut être pur ou accompagné d'impuretés volatiles. Ainsi, la solution d'alcali finale peut éventuellement contenir quelques impuretés organiques, sans incidence sur la qualité du produit.

L'étape de récupération de l'évent peut être réalisée par exemple par des systèmes de ventilation/extraction.

L'effluent récupéré est ensuite envoyé dans un laveur de gaz acide.

La solution de lavage est très préférentiellement une solution d'acide nitrique (HNO₃).

Le NH₃ gazeux contenu dans l'effluent est transféré dans la solution de lavage. On obtient une solution de nitrate d'ammonium. La réaction qui se produit est la suivante :

NH₃ + HNO₃ → NH₄NO₃

Le contrôle de la concentration en NH₄NO₃ peut être réalisé par contrôle de pH, par contrôle du débit de HNO₃ et/ou par densité.

Par ailleurs l'effluent gazeux épuré, qui ne contient plus d'ammoniac est envoyé en post-traitement ou cheminée.

On fait ensuite réagir la solution de nitrate d'ammonium avec une solution basique, par exemple de la soude (NaOH), de la potasse (KOH) ou de la chaux (Ca(OH)₂) de façon à entraîner l'évaporation d'ammoniac gazeux et à obtenir des sels de nitrate.

La réaction qui se produit est la suivante :

NH₄NO₃ + xOH → xNO₃ + H₂O + NH₃

La quantité de solution basique utilisée pour obtenir l'évaporation d'ammoniac est choisie de façon à avoir un pH du mélange NH₄NO₃/xOH basique, préférentiellement supérieur à 7,3, très préférentiellement compris entre 9 et 12,5.

En effet, l'évaporation de NH₃ démarre généralement dès que le pH dépasse 7,3. Un maximum d'évaporation a lieu pour un pH basique supérieur à 9.

Une fois l'ammoniac complètement évaporé, généralement entre pH 11 et 12, les sels de nitrate (par exemple nitrate de sodium si la soude a été utilisée) peuvent être récupérés pour former une solution de sels de nitrate, notamment à une concentration comprise entre 10% et 50%. La concentration en xNO₃ dans la solution peut être réalisée par contrôle de pH.

Une telle solution peut être utilisée dans diverses applications industrielles, telles que la fabrication d'engrais ou le traitement des réseaux d'assainissement afin d'éviter les formations d'odeurs.

Selon une variante, une fois l'ammoniac évaporé, une faible quantité d'acide nitrique peut être ajoutée avant de récupérer la solution de sels de nitrate, afin de rabaisser le pH et neutraliser l'excès de solution basique (soude, potasse ou chaux).

Le procédé selon l'invention aboutit à l'évaporation de NH₃ pur ou accompagné de quelques impuretés mineures.

Ce NH₃ est ensuite envoyé dans un contacteur gaz-liquide comme une colonne d'absorption.

L'absorption consiste à transférer la masse de NH₃ en phase gazeuse vers la phase liquide. Cette absorption peut être réalisée à l'aide d'un liquide à co-courant ou contre-courant qui permet de favoriser l'absorption de l'ammoniac dans l'eau. Il peut s'agir d'un contact en une passe ou avec un recyclage de façon à optimiser les concentrations.

En sortie du contacteur gaz-liquide on obtient une solution d'alcali. Préférentiellement cette solution aqueuse comprend entre 5% et 35% d'ammoniac, encore plus préférentiellement entre 10% et 30%. La concentration en ammoniac dans la solution finale est contrôlée par l'apport d'eau dans le contacteur gaz-liquide où est réalisée l'absorption. Plus il y a d'eau, moins la solution sera concentrée en ammoniac.

Un exemple d'installation permettant le traitement d'un effluent gazeux pollué à l'ammoniac ainsi que la production d'une solution d'alcali et d'une solution de sels de nitrate, est représenté sur la figure 1.

Une telle installation 10, comprend au moins les éléments suivants :
- un contacteur gaz-liquide 12, par exemple un laveur de gaz acide, avec une solution de lavage à l'acide nitrique, avec au moins une entrée 12-1 pour un effluent gazeux pollué à l'ammoniac, et une sortie 12-2 pour une solution de nitrate d'ammonium,
- un bac 18 de réaction, avec une entrée 18-1 pour la solution de nitrate d'ammonium et une entrée 18-2 pour la solution basique, et avec une sortie 18-3 d'ammoniac gazeux et une sortie 18-4 de solution de sels de nitrate,
- un contacteur gaz-liquide 20, par exemple une colonne d'absorption, avec une entrée 20-1 d'ammoniac gazeux obtenu en sortie de la cuve 18, une entrée d'eau 20-2 pure et une sortie 20-3 de solution d'alcali.

Préférentiellement, l'installation 10 comprend au moins les éléments suivants :
- un contacteur gaz-liquide 12, par exemple un laveur de gaz acide, avec une solution de lavage à l'acide nitrique, avec au moins une entrée 12-1 pour un effluent gazeux pollué à l'ammoniac, et une sortie 12-2 pour une solution de nitrate d'ammonium,
- un bac 14 de stockage de la solution de nitrate d'ammonium obtenue en sortie 12-2,
- un bac 16 de stockage de solution basique, par exemple de soude, de chaux ou de potasse,
- un bac 18 de réaction, avec une entrée 18-1 pour la solution de nitrate d'ammonium contenue dans le bac 14 et une entrée 18-2 pour la solution basique contenue dans le bac 16, et avec une sortie 18-3 d'ammoniac gazeux et une sortie 18-4 de solution de sels de nitrate,
- un contacteur gaz-liquide 20, par exemple une colonne d'absorption, avec une entrée 20-1 d'ammoniac gazeux obtenu en sortie de la cuve 18, une entrée d'eau 20-2 pure et une sortie 20-3 de solution d'alcali.

Le bac 14 de stockage de NH₄NO₃ est préférentiellement un bac de 700 à 2500 litres. Un tel bac est en mesure de recevoir un à quatre jours de purge. La solution de NH₄NO₃ stockée est destinée à être introduite dans le bac 18 de réaction.

Le bac 18 est alimenté en NH₄NO₃ et en solution basique (soude/chaux ou potasse). Il peut par exemple avoir une contenance de 40 à 120 l.

Dans le cas d'une installation non automatique, un indicateur de pH peut être utilisé pour suivre l'évolution du pH et arrêter l'introduction de solution basique lorsque le pH atteint une valeur déterminée, généralement entre 11 et 12. Dans le cas d'une version automatique, un contrôle de la courbe de pH régule l'appoint de soude.

Le débit d'eau est contrôlé de façon à obtenir en sortie une solution d'alcali concentrée entre 5 et 35%.

Dans un but illustratif, un essai a été mené avec l'installation décrite ci-dessus. En entrée 12-1 d'un laveur acide 12, on introduit 10 000 Nm³/h (Normo m³/h) d'air pollué à l'ammoniac, correspondant à 200 g/h d'ammoniac gazeux pur.

Le rendement du laveur 12 est de 99% et le pH est de 3,5.

En sortie 12-2 on obtient une solution contenant du NH₄NO₃ à une concentration de 200g/l, que l'on stocke dans un bac 14 pouvant contenir 1200 l.

Le réacteur 18, un bac de 601, est ensuite alimenté pendant une heure en NH₄NO₃ et en soude. Le pH en fin de neutralisation est de 11,5.

Le NH₃ évaporé en sortie 18-3, est envoyé dans le contacteur 20, et en sortie on récupère 16,20 kg de solution d'alcali à 15,5% (155g/l de nitrate), soit un taux de récupération et de recyclage d'ammoniac de 98,5%.

Par ailleurs en sortie 18-4, on récupère une solution de nitrate de sodium à 21% (212 g/l).

La solution d'alcali obtenue par la mise en oeuvre du procédé selon l'invention peut être utilisée dans différents domaines, en particulier pour la fabrication d'engrais, le désétamage, le décapage et le détartrage des métaux, le traitement des minerais, la fabrication de colorants, l'industrie des explosifs, l'industrie des circuits imprimés, comme solvant du cuivre, la fabrication de produits pharmaceutiques, la fabrication de produits photographiques, la fabrication de produits alimentaires, l'industrie des matières plastiques, l'industrie des colles et des gélatines, la préparation des sels d'ammonium, les réactifs analytiques, etc.

Avantageusement le procédé selon l'invention permet à la fois :
- de traiter et épurer les évents pollués à l'ammoniac, sans rejet, et
- de produire une solution ammoniacale et éventuellement des co-produits, utilisable(s) dans l'industrie ou l'agriculture.

Vis-à-vis des procédés de traitement des effluents pollués à l'ammoniac existants, l'invention présente la même efficacité, la même simplicité mais à un coût moindre. Il permet un gain économique, ainsi qu'un gain environnemental important du fait du recyclage complet des déchets.

Vis-à-vis des procédés existants de fabrication de solutions d'alcali, l'invention présente l'avantage d'être sans danger, simple à utiliser, économique et de recourir à des sources de matières premières existantes évitant ainsi toute consommation d'énergie fossile.

Bien entendu, l'invention n'est évidemment pas limitée à l'exemple représenté et décrit ci-dessus, mais couvre au contraire toutes les variantes permettant la mise en oeuvre de l'utilisation et du procédé revendiqué.

## Revendications

1. Procédé de traitement d'un effluent pollué à l'ammoniac, **caractérisé en ce qu'**il comprend les étapes suivantes :
- récupération d'un effluent gazeux pollué à l'ammoniac issu de la fermentation de matière organique, de boues de stations d'épuration, d'élevage ou encore d'usines de traitement de surface,
- absorption de l'ammoniac gazeux contenu dans l'effluent par lavage à l'acide nitrique, de façon à obtenir une solution de nitrate d'ammonium,
- ajout d'une solution basique à la solution de nitrate d'ammonium de façon à entraîner l'évaporation d'ammoniac et obtenir des sels de nitrate, cette étape étant réalisée à une pression inférieure à la pression atmosphérique, et
- absorption de l'ammoniac évaporé dans un contacteur gaz-liquide pour produire une solution d'alcali.

2. Procédé de traitement d'un effluent pollué à l'ammoniac selon la revendication 1, **caractérisé en ce que** la solution d'alcali comprend entre 5 et 35% d'ammoniac.

3. Procédé de traitement d'un effluent pollué à l'ammoniac selon l'une des précédentes revendications, **caractérisé en ce que** la quantité de solution basique utilisée pour obtenir l'évaporation d'ammoniac est choisie de façon à avoir un pH basique du mélange.

4. Procédé de traitement d'un effluent pollué à l'ammoniac selon l'une des précédentes revendications, **caractérisé en ce qu'**il comprend également une étape de récupération de sels de nitrate après évaporation de l'ammoniac.

5. Procédé de traitement d'un effluent pollué à l'ammoniac selon la revendication 4, caractérisé en en ce que les sels de nitrate sont récupérés pour produire une solution comprenant entre 10 et 50% de sels de nitrate.

## Patentansprüche

1. Verfahren zur Behandlung eines mit Ammoniak verunreinigten Abflusses, **dadurch gekennzeichnet, dass** dieses die folgenden Verfahrensschritte umfasst:
- Rückgewinnung eines mit Ammoniak verunreinigten gasförmigen Abflusses, der aus der Gärung von organischem Material, aus Schlamm von Kläranlagen, Aufzuchtstationen oder auch aus Werken zur Oberflächenbehandlung hervorgeht,
- Absorption des im Abfluss enthaltenen gasförmigen Ammoniaks durch Waschen in Salpetersäure, um auf diese Weise eine Lösung von Ammoniumnitrat zu erhalten,
- Hinzufügen einer basischen Lösung zur Lösung von Ammoniumnitrat, um auf diese Weise die Verdampfung von Ammoniak zu bewirken und Nitratsalze zu erhalten, wobei dieser Verfahrensschritt bei einem Druck unterhalb von Umgebungsdruck ausgeführt wird, und
- Absorption des verdampften Ammoniaks in einer Gas-Flüssigkeits-Kontaktvorrichtung, um eine alkalische Lösung herzustellen.

2. Verfahren zur Behandlung eines mit Ammoniak verunreinigten Abflusses nach Anspruch 1, **dadurch gekennzeichnet, dass** die alkalische Lösung zwischen 5 und 35% Ammoniak enthält.

3. Verfahren zur Behandlung eines mit Ammoniak verunreinigten Abflusses nach einem der vorhergehenden Ansprüche, **dadurch gekennzeichnet, dass** die Menge der basischen Lösung, die dazu verwendet wird, die Verdampfung des Ammoniaks zu bewirken, derart gewählt ist, dass ein basischer pH-Wert der Mischung erhalten wird.

4. Verfahren zur Behandlung eines mit Ammoniak verunreinigten Abflusses nach einem der vorhergehenden Ansprüche, **dadurch gekennzeichnet, dass** dieses auch einen Verfahrensschritt zur Wiedergewinnung der Nitratsalze nach der Verdampfung des Ammoniaks umfasst.

5. Verfahren zur Behandlung eines mit Ammoniak verunreinigten Abflusses nach Anspruch 4, **dadurch gekennzeichnet, dass** die Nitratsalze wiedergewonnen werden, um eine Lösung mit 10 bis 50% Nitratsalzen zu erzeugen.

## Claims

1. A method for treating an effluent polluted with ammonia, **characterised in that** it comprises the following steps:
- recovering a gaseous effluent polluted with ammonia issuing from the fermentation of organic matter, from sewerage-plant sludge, from animal husbandry or from surface-treatment plants,
- absorbing the gaseous ammonia contained in the effluent by washing with nitric acid, so as to obtain an ammonium nitrate solution,
- adding a basic solution to the ammonium nitrate solution so as to cause the evaporation of ammonia and obtain nitrate salts, this step being performed at a pressure below atmospheric pressure, and
- absorbing the evaporated ammonia in a gas-liquid contactor in order to produce an alkali solution.

2. A method for treating an effluent polluted with ammonia according to claim 1, **characterised in that** the alkali solution comprises between 5% and 35% ammonia.

3. A method for treating an effluent polluted with ammonia according to either of the preceding claims, **characterised in that** the quantity of basic solution used for obtaining the evaporation of ammonia is chosen so as to have a basic pH of the mixture.

4. A method for treating an effluent polluted with ammonia according to any of the preceding claims, **characterised in that** it also comprises a step of recovering nitrate salts after evaporation of the ammonia.

5. A method for treating an effluent polluted with ammonia according to claim 4, **characterised in that** the nitrate salts are recovered in order to produce a solution comprising between 10% and 50% nitrate salts.
